# EUROPEAN PATENT APPLICATION

(11) **EP 3 958 176 A1**
(43) Date of publication of application: **23.02.2022**
(21) Application number: 20791045.6
(22) Date of filing: 15.04.2020
(51) Int. Cl.: G06K 17/00, G06Q 10/08

(54) **MANAGEMENT SYSTEM FOR RESTAURANT COLD STORE**

(30) Priority: 15.04.2019 CN 201910297866
(71) Applicant: Shengdoushi (Shanghai) Science and Technology Development Co., Ltd., Shanghai 200120 (CN)
(72) Inventor: ZHANG, Lei, Shanghai 200030 (CN); JIANG, Yina, Shanghai 200030 (CN)
(74) Representative: Taruttis, Tilman
(86) International application number: PCT/CN2020/084877
(87) International publication number: WO 2020/211771

(57) **Abstract**

The present disclosure discloses a management system for a restaurant cold store. The management system comprises: RFID tags (1), an RFID reader (2), a door opening and closing sensor (3), and a computer system. Each RFID tag has a unique electronic code and can be attached to a material. The RFID reader is used for reading data from the RFID tags. The door opening and closing sensor is used for monitoring the state of the door of the cold store to trigger the RFID reader to read the data from the RFID tags when the door is closed, so as to automatically trigger a stock count. The computer system stores inventory data of materials in the cold store, and the computer system updates the inventory data according to the data obtained by the RFID reader when the door opening and closing sensor detects that the door of the cold store is closed. With the help of RFID technology, the management system realizes the counting and updating of the inventory data of the restaurant cold store, so that accurate inventory data of the cold store can be obtained in real time, which is helpful for quickly making inventory adjustment strategies.

## Description

### CROSS REFERENCE TO RELATED APPLICATIONS

This patent application claims priority to Chinese Patent Application No. 201910297866.6, filed on Apr. 15, 2019, the disclosures of which are incorporated by reference herein in their entirety as part of the present application.

### TECHNICAL FIELD

The present disclosure relates to the catering industry, specifically, to a management system for restaurant cold store.

### BACKGROUND

In the catering industry, in order to know the inventory data of the materials in the restaurant cold store, it is necessary to take stock of the materials in the cold store frequently.

The existing inventory method is that the staff enter the cold store for inventory, record the inventory data of the materials on paper, and then enter it into the computer system. In addition, the staff will manually write down the name, quantity and expiration time of the materials near the expiration date on the board at the door of the cold store. However, the manual inventory method is very inefficient, making it impossible to obtain accurate inventory data in real time to quickly make inventory adjustment strategies.

In the prior art, there is also a way to manage cold stores by scanning QR codes. However, since a large number of materials enter and leave the cold store every day, the costs of generating, pasting and reading the QR codes are too high.

In the prior art, there is also a way to manage cold stores by using an automatic shelf. However, this solution entails high costs on warehouse transformation, requires a long implementation period, and has a very high requirement for the standardization of staff's operations.

### BRIEF DESCRIPTION

The present disclosure is to provide a management system for a restaurant cold store, so as to solve the problems existing in the prior art.

The embodiments of the present disclosure provide a management system for a restaurant cold store, the management system comprising:
RFID tags, each RFID tag having a unique electronic code and being able to be attached to a material;
a RFID reader for reading data from the RFID tags;
a door opening and closing sensor for monitoring the state of the door of the cold store to trigger the RFID reader to read the data from the RFID tags when the door is closed, so as to automatically trigger a stock count; and
a computer system in which inventory data of materials in the cold store is stored, wherein the computer system updates the inventory data according to the data obtained by the RFID reader when the door opening and closing sensor detects that the door of the cold store is closed.

The computer system may also store expiration date information corresponding to each of the RFID tags.

The computer system may generate a reminder information when the inventory data shows that there are materials approaching the expiration date in the cold store.

The computer system may generate a reminder information when the inventory data shows that a material with a later expiration date leaves the cold store before a material of the same kind with an earlier expiration date.

The reminder information may be text or image information displayed on a display device of the computer system and/or voice information sent by a voice device of the computer system.

The RFID tags may be clip-type tags.

The RFID tags may be reused.

The RFID tags may be active tags.

The RFID tags may be integrally formed tags.

RFID tags used for different kinds of materials may have different colors and be marked with corresponding material names.

The management system for a restaurant cold store in the embodiments of the present disclosure has at least the following advantages:
In the present disclosure, the counting and updating of the inventory data of the restaurant cold store are realized with the help of RFID technology, so that accurate inventory data of the cold store can be obtained in real time, which is helpful for quickly making inventory adjustment strategies.
In the present disclosure, the validity period of the materials in the cold store is managed with the help of the expiration date information corresponding to the RFID tag. The computer system generates a reminder information when there are materials approaching the expiration date in the cold store or when a material with a later expiration date leaves the cold store before a material of the same kind with an earlier expiration date, so as to remind the staff to deal with the materials approaching the expiration date as soon as possible or to deal with the materials with an earlier expiration date in advance to avoid the waste of materials due to exceeding the expiration date.
In the present disclosure, the RFID tags may be clip-type tags, so that the RFID tags can be arranged on a food bag containing materials.
In the present disclosure, the RFID tags can be reused, so as to greatly reduce costs.
In the present disclosure, the RFID tags are active tags to solve the problem of meat materials shielding RFID signals.
In the present disclosure, the RFID tags are integrally formed tags, so as to achieve waterproof and oil-proof functions and facilitate cleaning.
In the present disclosure, RFID tags used for different kinds of materials have different colors and are marked with corresponding material names, so that the staff can arrange the RFID tag on the corresponding material conveniently.

### BRIEF DESCRIPTION OF THE DRAWINGS

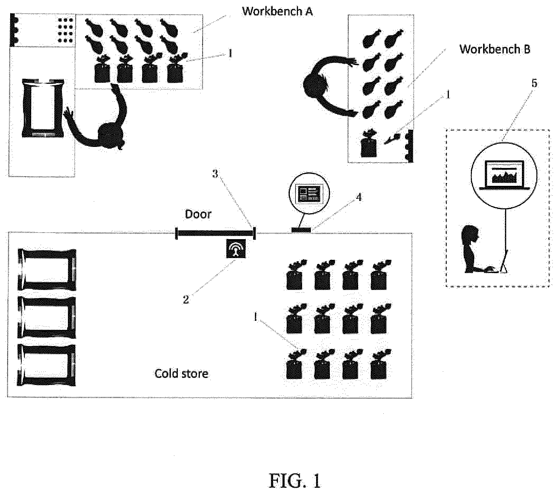

Fig. 1 shows a specific scenario of the management system for a restaurant cold store according to the present disclosure.

### DETAILED DESCRIPTION

The embodiments of the present disclosure are described below with reference to the drawings. Many specific details are described below to enable those skilled in the art to understand and implement the present disclosure more comprehensively. However, it is obvious to those skilled in the art that some of these specific details may be absent in the implementation of the present disclosure. In addition, it should be understood that the present disclosure is not limited to the specific embodiments as described. On the contrary, any combination of the features and elements described below may be considered to implement the present disclosure, regardless of whether they involve different embodiments. Therefore, the following aspects, features, embodiments and advantages are for illustrative purposes only, and should not be regarded as elements or limitations of the claims, unless explicitly stated in the claims.

An embodiment of the present disclosure proposes a management system for a restaurant cold store based on RFID (Radio Frequency Identification) technology. The management system includes RFID tags, a RFID reader, a door opening and closing sensor, and a computer system.

Each of the RFID tags has a unique electronic code and can be attached to a material. The RFID tags may be clip-type tags, so that the RFID tags can be arranged on a food bag containing materials. The clip-type RFID tags can be manufactured by arranging components such as coupling elements and chips for constituting the RFID tag inside or on the surface of a clip-shaped carrier. The RFID tags can be reused, so as to greatly reduce costs. The RFID tags may be active tags to solve the problem of semi-finished meat products shielding RFID signals. The RFID tags may be integrally formed tags. For example, the components such as coupling elements and chips for constituting the RFID tag can be encapsulated in a plastic carrier (such as a clip-shaped carrier) by injection molding to achieve waterproof and oil-proof functions and facilitate cleaning. RFID tags used for different kinds of materials have different colors and are marked with corresponding material names, so that the staff can arrange the RFID tag on the corresponding material conveniently.

The RFID reader is used to read data from RFID tags.

The door opening and closing sensor is used to monitor the state of the door of the cold store to trigger the RFID reader to read the data from the RFID tags when the door is closed, so as to automatically trigger a stock count.

Inventory data of materials in the cold store is stored in the computer system, and the computer system updates the inventory data according to the data obtained by the RFID reader when the door opening and closing sensor detects that the door of the cold store is closed. The computer system can also store expiration date information corresponding to each RFID tag. The computer system can generate a reminder information when the inventory data shows that there are materials approaching the expiration date in the cold store. The computer system can generate a reminder information when the inventory data shows that a material with a later expiration date leaves the cold store before a material of the same kind with an earlier expiration date. The reminder information may be text or image information displayed on a display device of the computer system, or voice information sent by a voice device of the computer system.

Fig. 1 shows a specific scenario of the management system for a restaurant cold store according to the present disclosure.

As shown in Fig. 1, the management system mainly includes: a clip-type RFID tag 1, an RFID reader 2, a door opening and closing sensor 3, a touch-screen controller 4, and a backend server 5.

As shown in Fig. 1, before the material enters the cold store, the staff set the clip-type RFID tag 1 on the food bag containing the material at the workbench A. The clip-type RFID tag 1 may preferably be an integrally formed active tag, and is marked with a corresponding material name.

The RFID reader 2 is arranged in the cold store for reading the data from the RFID tag 1. An RFID read-write device can be used in place of the RFID reader to read data from and write data to the RFID tag 1.

The door opening and closing sensor 3 monitors the state of the door of the cold store and triggers the RFID reader 2 to read the data from the RFID tag 1 when it is detected that the door is closed, so as to automatically trigger a stock count.

The touch screen controller 4 and the backend server 5 form the computer system for controlling the operation of the management system. The backend server 5 stores inventory data of materials in the cold store. When the door opening and closing sensor 3 detects that the door of the cold store is closed, the backend server 5 updates the inventory data according to the data obtained by the RFID reader 2. The backend server 5 also stores expiration date information corresponding to each RFID tag 1. When there is a material approaching the expiration date in the cold store or a material with a later expiration date leaving the cold store before a material of the same kind with an earlier expiration date, a text or image reminder can be displayed on the display screen of the touch-screen controller 4, or a voice reminder can be sent by the speaker of the touch-screen controller 4, so as to remind the staff to deal with the materials approaching the expiration date as soon as possible or to deal with the materials with an earlier expiration date in advance.

After taking the material out of the cold store, the staff removes the clip-type RFID tag 1 from the food bag at the workbench B, and cleans and recycles it.

In the embodiments provided by the present disclosure, a person with ordinary skill in the art can understand that the disclosed system may be implemented in other ways. For example, the system embodiment described above is only illustrative. For example, the modules are divided by the logical function, but they may be divided in other ways in actual implementation. For example, the functions of multiple modules can be combined or functions of a single module can be further divided. The modules in the various embodiments of the present disclosure may be integrated into one processing unit, or each module may exist alone physically, or two or more modules may be integrated into one unit. The integrated module can be implemented either in the form of hardware or in the form of a software functional unit.

If the integrated unit is implemented in the form of a software functional unit and sold or used as an independent product, it can be stored in a computer readable storage medium. Based on this understanding, the technical solution of the present disclosure essentially or a part thereof that contributes to the prior art or all or part of the technical solution can be embodied in the form of a software product. The computer software product is stored in a storage medium, including several instructions to enable a computer device (which may be a personal computer, a server, or a network device, etc.) or a processor to execute all or part of the steps of the method described in the embodiments of the present disclosure. The storage medium includes U disk, mobile hard disk, ROM (Read-Only Memory), RAM (Random Access Memory), magnetic disk, optical disk, and other media that can store program codes.

The above embodiments are the preferred ones in the present disclosure, but the present disclosure is not limited thereto. Any changes and modifications made by a person skilled in the art without departing from the spirit and scope of the present disclosure shall be included in the scope of protection of the present disclosure. Therefore, the scope of protection of the present disclosure shall be determined by the claims.

## Claims

1. A management system for a restaurant cold store, wherein the management system comprising:
RFID tags, each RFID tag having a unique electronic code and being able to be attached to a material;
an RFID reader for reading data from the RFID tags;
a door opening and closing sensor for monitoring the state of the door of the cold store to trigger the RFID reader to read the data from the RFID tags when the door is closed, so as to automatically trigger a stock count; and
a computer system in which inventory data of materials in the cold store is stored, wherein the computer system updates the inventory data according to the data obtained by the RFID reader when the door opening and closing sensor detects that the door of the cold store is closed.

2. The management system according to claim 1, wherein the computer system also stores expiration date information corresponding to each of the RFID tags.

3. The management system according to claim 2, wherein the computer system generates a reminder information when the inventory data shows that there are materials approaching the expiration date in the cold store.

4. The management system according to claim 2, wherein the computer system generates a reminder information when the inventory data shows that a material with a later expiration date leaves the cold store before a material of the same kind with an earlier expiration date.

5. The management system according to claim 3 or 4, wherein the reminder information is text or image information displayed on a display device of the computer system and/or voice information sent by a voice device of the computer system.

6. The management system according to claim 1, wherein the RFID tags are clip-type tags.

7. The management system according to claim 1, wherein the RFID tags can be reused.

8. The management system according to claim 1, wherein the RFID tags are active tags.

9. The management system according to claim 1, wherein the RFID tags are integrally formed tags.

10. The management system according to claim 1, wherein RFID tags used for different kinds of materials have different colors and are marked with corresponding material names.
